Europäisches Patentamt

European Patent Office

Office européen des brevets

(19)

(11) Publication number: **0 405 654 A2**

# EUROPEAN PATENT APPLICATION

(12)

(21) Application number: 90201599.9

(22) Date of filing: **19.06.90**

(51) Int. Cl.⁵: **B60R 22/32**

(30) Priority: **30.06.89 IT 6753989**

(43) Date of publication of application:
**02.01.91 Bulletin 91/01**

(84) Designated Contracting States:
**AT BE CH DE DK ES FR GB IT LI NL SE**

(71) Applicant: **Bertocci, Luciano**
**Via Bongiovanni 3, Regione Zucche**
**I-10040 Volvera (Torino)(IT)**

(72) Inventor: **Bertocci, Luciano**
**Via Bongiovanni 3, Regione Zucche**
**I-10040 Volvera (Torino)(IT)**

(74) Representative: **Spandonari, Carlo**
**corso Re Umberto 56**
**I-10128 Torino(IT)**

(54) Emergency tripping device for safety belts, particularly for motor vehicles.

(57) The device comprises a housing adapted to be attached to the clasp of a safety belt, and having hooking means for engagement with the release button on the clasp, and adapted to take a rest position in which they allow the release button to move freely, and a work position in which they depress the clasp button; and actuator means sensitive to the ambient temperature, for forcing said hooking means to their work position when the ambient temperature rises above a predetermined value for water is present around the housing.

Fig. 1

EP 0 405 654 A2

# EMERGENCY TRIPPING DEVICE FOR SAFETY BELTS, PARTICULARLY FOR MOTOR VEHICLES

DISCLOSURE

This invention is concerned with an emergency tripping device for safety belts, particularly for motor vehicles.

Safety belts have achieved worldwide diffusion as a protection means for the life and limbs of persons vehicles, and their use has now become compulsory by law in countries. However, although safety belts undeniably help in reducing mortality and curbing the gravity of traumas in motorcar accidents, their effectiveness is only statistical, and in certain cases safety belts have been known to be harmful, typically where the vehicle takes fire or accidentally sinks in rivers or lakes while the passenger is unconscious or panic-stricken. In such cases the inability to promptly trip the belt, or even the few seconds required for the tripping operation, can put to risk the life of the passenger, hindering him from leaving the vehicle in time for avoiding fire or drowning, or even merely delaying the rescue operations.

The primary object of the invention is therefore to provide an emergency tripping device for safety belts, which automatically disengages the belt, thus freeing the person fastened, in circumstances when the belt is harmful for safety.

The invention achieves the above and other objects and advantages, such as will appear from the following disclosure, with an emergency tripping device for safety belts fastened with a clasp having a release button, particularly for motor-vehicles, characterized in that it comprises:

a) a housing adapted to be attached to the clasp of a safety belt, and having hooking means for engagement with the release button on the clasp, and adapted to take a rest position in which they allow the release button to move freely, and a work position in which they depress the clasp button; and

b) actuator means sensitive to the ambient temperature, for forcing said hooking means to their work position when the ambient temperature rises above a predetermined value.

According to a further important feature, said tripping device is further characterized in that said actuator means are also sensitive to the existence of water around said housing, for causing said hooking bans to go from their rest position to their work position when water is present around said housing.

The invention will now be described more closely with reference to a few preferred embodiments, shown in the attached drawings by way of illustration and not of limitation, and wherein:

Fig. 1 is a side view of a tripping device according to a first preferred embodiment of the invention, as applied to a safety belt clasp;

Fig. 2 is a view in cross-section, on an enlarged scale, of the tripping device shown in Fig. 1, made along line II-II;

Fig. 3 is a diagram of the electrical circuit of the tripping device of Fig. 2;

Fig. 4 is a side view of a second embodiment of tripping device according to the invention; and

Fig. 5 is a circuit diagram showing the electrical connection for the second embodiment of the tripping device.

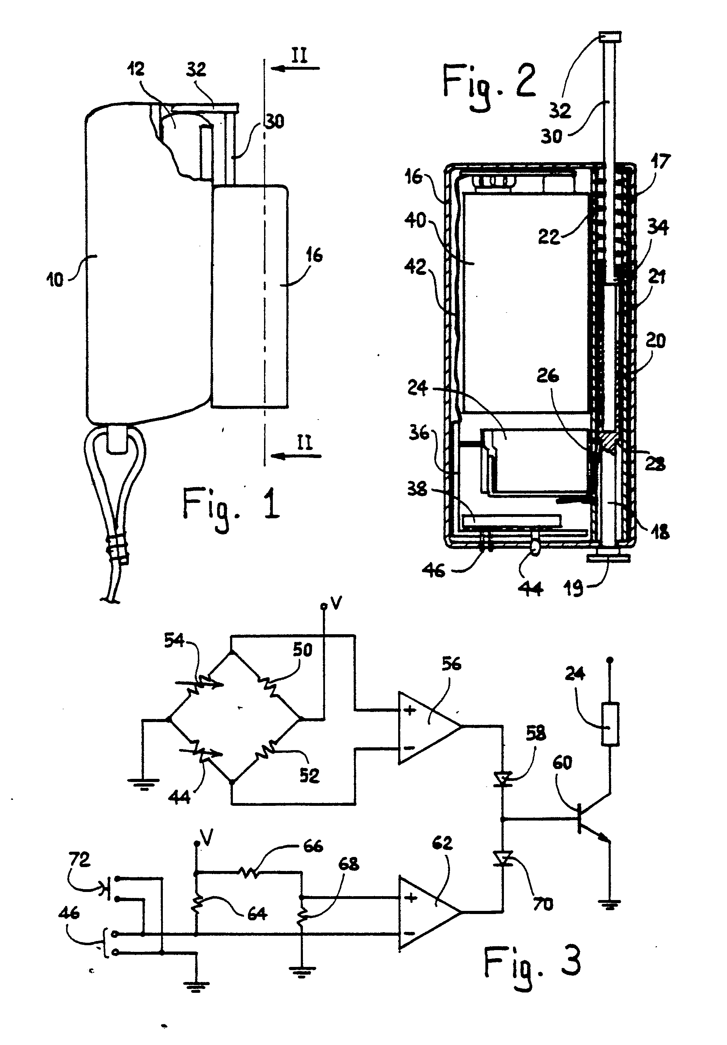

Fig. 1 shows a clasp 10 belonging to a safety belt (not shown), having a fastening mechanism known per se, which is normally fastened under the action of a sprig not shown, and which can be disengaged by pressing a button 12.

On the side of clasp 10 a housing 16 for the tripping device according to the preferred nt of the invention is rigidly attached, preferably by means of a cement, or by means of straps (not shown). With further reference to Fig. 2, a slide 18 is slidable in a guide 17 in housing 16, the slide having a button 19 projecting at one end, and having a hollow portion 20 where a slot 21 is made. The slide is downwardly biased by a wound spring 22, which is also received in guide 17. A relay 24, also received in housing 16, has an armature 26 which, in a rest position, abuts against a projection 28 in slide 18, thus retaining it in a cocked position, against the bias of wound spring 22.

A rod 30 is freely slidable in the hollow portion of slide 18, and has a tooth 32 which is fastened, and preferably cemented or otherwise attached, to the top of button 12. At its other end, rod 30 has another tooth 34, which is slidably received in slot 21 of slide 18. Therefore, rod 30 is normally free to move following the movement of button 12, but when slide 18, as a consequence of the tripping of relay 24, is drawn by spring 22, it pulls rod 30, due to the engagement between tooth 34 and the top of slot 21, thus depressing also button 12. To this end, spring 22 is made with an elastic constant greater than the spring (not shown) which acts in clasp 10 of the safety belt.

In the housing 16 of the tripping device is also accommodated an L-shaped bracket 36, bearing an electric circuit 38 for driving relay 24, and supplied by an alkaline battery 40 through wires 42. Circuit 38 has a temperature probe 44 and a her probe 46 (described below) which surface on the wall of housing 16.

Fig. 3 shows the diagram of the electric circuit 38 of Fig. 2. Temperature probe 44, comprising an resistor, is connected in a Wheatstone bridge comprising two fixed resistors 50, 52 and a variable resistor 54 for calibration. Two opposite junctions of the bridge are connected to ground and to the battery voltage, respectively, while the other two junctions are connected to the respective inverting and non-inverting inputs of a differential amplifier 56. The output of amplifier 56, through a decoupling diode 58, drives the base of a transistor 60 acting as an electronic switch in the supply path to relay 24.

Water probe 46 comprises two electrodes, which are connected the one to ground, the other to the inverting apmplifier of a second differential amplifier 62, with a pull-up resistor 64 to the battery. The non-inverting input of differential amplifier 62 is connected to a divider comprising two resistors 66, 68, connected across the battery. The output of differential amplifier 62 is also connected to the base of transistor 60 through another decoupling diode 70. A test contact 72 is preferably connected In parallel to probe 46.

Both Wheatstone bridge 44, 50, 52, 54 and divider 64, 66 are designed so that in normal ambient conditions (dry environment at a temperature below 70° C) the outputs of both amplifiers 56 and 62 are so low that transistor 60 is turned off, and relay 24 is therefore at rest. In such circumstances, if the device has been cocked by pushing up slide 18 until it is engaged by armature of relay 24, the safety belt clasp can operate normally, without interference from the tripping device.

If, because of a fire aboard the vehicle, the ambient temperature rises above 70° C, the Wheatstone bridge becomes unbalanced and the output of amplifier 56 turns on transistor 60, thus exciting relay 24 and disengaging slide 18. The latter is therefore pulled by spring 22 to its work position, and pulls the rod with it, thus depressing button 12 of clasp 10, and disengaging the belt.

The same thing happens if electrodes 46 are washed over by water having entered the vehicle. In this case, the inverting input of amplifier 62 is brought to ground, thus sending high its output voltage, which controls transistor 60, eventually causing, also in this case, the safety belt to disengage. Test contact 72 can be pressed by the user in order to occasionally check the proper operation of the device.

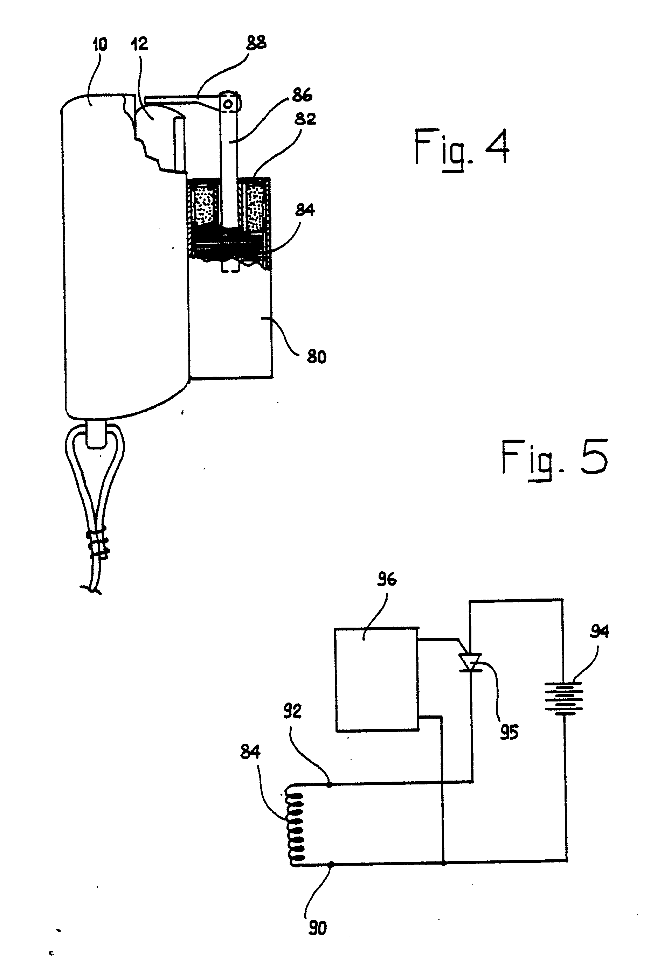

Fig. 4 is a view similar to Fig. 1, and shows a second preferred embodiment of the invention. Clasp 10 now has a housing 80 containing a spool 82 on which a solenoid 84 is wound. In the spool is received a slide 86 having a tooth 88 at its upper end, for hooking onto the top of clasp button 12, similarly to the embodiment of Fig. 1.

With reference to Fig. 5, the ends of solenoid 84 are connected ·to two terminals 90, 92, one of which is connected to one end of the on-board battery of the vehicle, schematically shown as 94, and the other of which is .connected to switching means comprising a TRIAC 95, leading to the other end of battery 95 and controlled by a unit 96 containing a control circuit similar to the circuit in Fig. 3.

The control circuit is substantially the same that is shown on Fig. 3, including the temperature probe and the water probe, except for being differently rated, and therefore it is not described here.

Solenoid 84 is normally inactive, and therefore allows slide 86 to move freely, following the movements of button 12 on clasp 10. Whenever one or the other of the probes is turned on and consequently turns on the switching means, solenoid 84 is supplied from battery 94, and draws sliide 86, thus depressing button 12 and releasing the belt.

The second embodiment obviously involves a strong instantaneous consumption of power, but the onboard battery of the vehicle can easily tolerate that. On the other hand, this embodiment has the advantage of dispensing with a return spring and a self-contained battery, and of having a simpler structure and therefore a more reliable operation.

The switching means, the control circuit and the probes of the second embodiment are contained in a unit separate from the housing that is attached to the clasp and that contains the solenoid and the slide, and are connected to the solenoid with cables. With this arrangement the unit can be connected to a plurality of solenoids in parallel, for controlling an eqaul plurality of clasps, e.g. the clasps of all the belts in the vehicle.

Similarly to the first embodiment, the second embodiment also preferably includes a button which can bo depressed to actuate all the solenoids controlled by the unit, both for checking the operability of the device and for simultaneous releasing all the belts by the driver of the vehicle.

The tripping device according to the invention can also be embodied in different forms. For instance, the actuating means for the slide might be an electrically fired pyrotechnic charge. Certain of the functions might be left out, e. g. the water probing, without detriment to the overall usefulness of the invention. Also, the diagram and operation of the electric control circuit might be changed, e. g. they might be implemented with digital devices, without departing from the scope of the invention. Finally, the tripping device of the invention could be made in one piece with the clasp of the safety belt, within one housing.

**Claims**

1. An emergency tripping device for safety belts fastened with a clasp having a release button, particularly for motor-vehicles, characterized in that it comprises:

a) a housing (16; 80) adapted to be attached to the clasp (10) of a safety belt, and having hooking means (18, 22, 30, 32; 82, 84, 86, 88) for engagement with the release button (12) on the clasp, and adapted to take a rest position in which they allow the release button to move freely, and a work position in which they depress the clasp button; and

b) actuator means (24, 26, 38, 44, 46; 96) sensitive to the ambient temperature, for forcing said hooking means to their work position when the ambient temperature rises above a predetermined value.

2. A tripping device according to claim 1, characterized in that said actuator means (24, 26, 38, 44, 46; 96) are also sensitive to the existence of water around said housing, for forcing said hooking means to their work position when water is present around said housing.

3. A tripping device according to claim 1 or 2, characterized in that said hooking means comprise a slide (21) biased by a spring (22) toward said work position, and a relay (24) having an armature (26) engaging said slide to hold it in a rest position, and in that said actuator means comprise an electric circuit (38) incorporating switching means (60) for connection of said relay to a battery (40), said electric circuit being controlled by at least one probe (44, 46).

4. A tripping device according to claim 1 or 2, characterized in that said hooking means comprise a slide (86) movable in a solenoid (82, 84), and in that said actuator means comprise an electric circuit (96) incorporating switching means (85) for connection of said solenoid to a battery (94) and withdrawal of the slide to said work position, said electric circuit being controlled by at least one probe (44, 46).

5. A tripping device according to claim 3, characterized in that the actuating means are contained in the same housing which accommodates the hooking means.

6. A tripping device according to claim 4, characterized in that the switching means (95) are arranged to connect said solenoid to an onboard battery (94) of the vehicle.

7. A tripping device according to any of claims 3 to 6, characterized in that said electric circuit comprises first amplifier means (56) controlled by an resistor (44) exposed to the outside of the housing, for causing the switching means to close when the resistance of the resistor falls below a a predetermined threshold value.

8. A tripping device according to claim 7, characterized in that said switching means are also driven by second amplifier means (62) controlled by a pair of electrodes (46) exposed to the outside of the housing, for causing the switching means to close when the isolation resistance between said electrodes falls below a predetermined threshold value.

9. A tripping device according to any of claims 1 to 8, characterized in that it is built into a clasp of a safety belt to form one housing therewith.

Fig. 1

Fig. 2

Fig. 3

Fig. 4

Fig. 5